# EUROPEAN PATENT APPLICATION

(11) **EP 1 315 022 A1**
(43) Date of publication of application: **28.05.2003**
(21) Application number: 01403044.9
(22) Date of filing: 27.11.2001
(51) Int. Cl.: G02F 1/13357, G02B 27/28

(54) **Polarization recycler**

(71) Applicant: Thomson Licensing, Inc., 92100 Boulogne-Billancourt (FR)
(72) Inventor: Drazic, Valter, 35830 Betton (FR); Hall, Estill, Fischer 46038 (US); O'Donnell, Eugene, Fischer 46038 (US)
(74) Representative: Browaeys, Jean-Philippe

(57) **Abstract**

A method for recovering polarization comprises the steps of: guiding light having first and second polarizations in a forward direction; providing in that order in the path of the guided light an apertured reflective surface and a reflective polarizer (30) forming a light channel therebetween; passing the guided light having the first polarization out of the light channel at the reflective polarizer; reflecting backwardly and forwardly into the light channel the light having the second polarization; transforming that reflected light having the second polarization into light having the first polarization; and, passing the light transformed to the first polarization out of the light channel at the reflective polarizer, thereby enabling more of the light having the first polarization to be passed out of the light channel. The method can be further implemented with a light channel forming a light integrator (20) and a quarter wave plate (32) to transform the polarizations states in the light channel. The method and apparatus can be used in an illumination system for a liquid crystal display.

## Description

This invention relates to the field of polarization recycling or recovery systems, and in particular, to the field of polarization recycling or recovery systems adapted for use in illumination system based LCD or LCOS imagers.

LCOS or LCD imagers need polarized light to function properly. In a conventional illumination system for LCD or LCOS imagers, the light is polarized by a sheet polarizer that absorbs one polarization component. There are two undesired effects. The polarizer is overheated and eventually damaged and more that half of the light available for illumination is lost.

Light is polarized if the electrical field associated with a ray is vibrating in one plane, perpendicular to the direction of propagation of the ray. Generally a light ray is randomly polarized, which means that the electric field can vibrate in any direction perpendicular to the direction of propagation. When a randomly polarized light ray hits a reflecting polarizer, for example, the polarizer transmits light that has the electric field vibrating in a first plane perpendicular to the direction of the propagation. The orientation of the plane is determined by the orientation of the polarizer. The polarizer also reflects light that has an electric field that vibrates in a second plane perpendicular to the direction of propagation. The transmitted electric field and the reflected electric field vibrate in planes that are perpendicular one to another. Hence, the reflecting polarizer passes or transmits light having one polarization and reflects light having a perpendicular, or second, polarization. The plane of polarization can be changed, for example by passing light through a quarter wave plate whose fast axis is at 45° from the orientation of the light ray's polarization. Passing light through two quarter wave plates, or passing light twice through the same quarter wave plate, for example, rotates the polarization plane by 90°.

The state of the art for recycling the polarization involves an array of polarization beam splitters (PBS) either associated with an integrating rod (e.g., Japanese Patent 10232430) or a fly eye lens system. While both means have excellent light throughput and illumination uniformity, there are some significant disadvantages. The price of a PBS array is quite high. Additional optics needed to implement operation a PBS array. PBS arrays require a lot of space, whereas space is often in short supply.

There is an urgent need for a new polarization recovery system that is much simpler and less expensive to implement, that can be implemented without additional lenses or space and that can be substituted into an existing light engine with little, if any, architectural change. Moreover, there is a continuing need for a new polarization recovery or recycling system that avoids thermally damaging polarizers, and at the same time, provides more polarized light for illuminating LCD or LCOS imagers more fully and efficiently.

The inventive arrangements taught herein satisfy the urgent and long-felt needs for a new polarization recovery or recycling system that is much simpler and less expensive to implement, that can be implemented without additional lenses or space, that can be substituted into an existing light engine with little, if any, architectural change, that avoids thermally damaging polarizers and that provides more polarized light for illuminating LCD or LCOS imagers more fully and efficiently.

In accordance with the inventive arrangements, polarization transforming means, for example a quarter wave plate, can be provided in a light integrator to recycle light originally reflected by the reflecting polarizer. The polarization transforming means can be positioned to enable the reflected light to pass through twice, for example during after back and forth reflections in the light path of the light integrator, thus transforming the reflected light to the correct polarization needed to be passed through the reflective polarizer. Accordingly, the light that is normally lost by being back reflected is recycled, or recovered, by transforming its polarization. The system advantageously exhibits very little losses, and therefore supplies significantly more polarized light more efficiently than prior art systems.

A polarization recovery system in accordance with the inventive arrangements comprises: a light channel; the light channel having a light injection aperture for receiving light from a source of illumination radiating light with first and second polarizations; the light channel having a reflecting polarizer that transmits the injected light having the first polarization and that reflects the injected light having the second polarization; at least one reflective surface for further reflecting the reflected light back toward the reflecting polarizer; and, means positioned in the light channel for transforming the light reflected by the reflecting polarizer into light having the first polarization, the transformed light also being transmitted by the reflecting polarizer.

A method for recovering polarization in an illumination system for a liquid crystal display, in accordance with the inventive arrangements, comprises the steps of : guiding light having first and second polarizations in a forward direction along a light path; passing the guided light having the first polarization out of the path; reflecting the light having the second polarization backwardly and forwardly along the light path; transforming the reflected light during the reflecting step to have the first polarization; and, passing the light transformed to the first polarization out of the path, enabling more of the light having the first polarization to be passed out of the path.

An illumination system for a liquid crystal imager, comprising : a source of randomly polarized light; a light integrator having an aperture at one end for receiving the randomly polarized light and having reflective surfaces defining an internal light path; a reflecting polarizer disposed at an opposite end of the light path that transmits light having a first polarization and that reflects light having a second polarization, the light having the second polarization being reflected back and forth along the light path; and, means positioned in the light channel for transforming the back and forth reflected light into light having the first polarization, the transformed light also being transmitted by the reflecting polarizer. A liquid crystal imager can be more efficiently illuminated by both components of the light transmitted by the reflecting polarizer and having the first polarization.

Figure 1 illustrates the general operating principle of the integrating light pipe, or rod.

Figures 2(a) and 2(b) are useful for explaining how to choose the size of the integrating light pipe, or rod.

Figures 3(a) and 3(b) are useful for explaining injection of the source into the integrating light pipe, or rod.

Figures 4(a), 4(b), 4(c) and 4(d) illustrate four embodiments for recovering polarization in accordance with the inventive arrangements.

Figure 5 is a simulation-generated waveform useful for explaining the efficiency of the inventive arrangements.

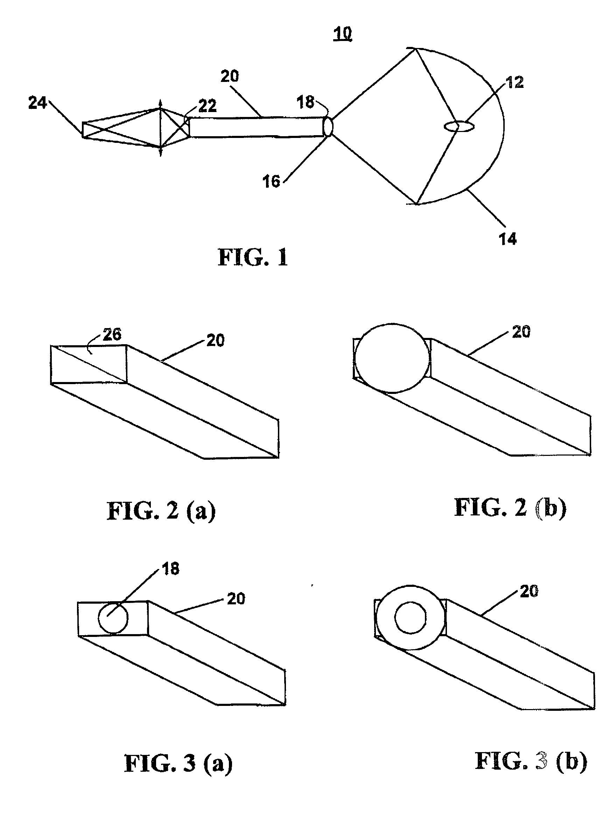

An illumination system 10 in accordance with the inventive arrangements and adapted for use with a liquid crystal imager, for example an LCD or LCOS (liquid crystal on silicon) imager, is shown in Figure 1. A source 12 of randomly polarized light radiates outwardly toward an elliptical reflector 14, which focuses an image 16 of the light at the entrance aperture 18 of a light integrator 20, for example an integrating light rod. Uniform light at the opposite end 22 of the light rod is radiated onto a liquid crystal imager 24.

The principle of the integrating rod for the illumination system is well established and widely used. It functionality is twofold: beam shaping from round to rectangular and illumination uniformity. The light coming out of a source is focused at the input side of an integrating rod. The light bounces into the rod by either reflecting from its mirrored sides or by total internal reflection if the rod is made out of glass. At the end of the rod, the illumination is uniform. The rod having a cross section of the same ratio than the imager, it's output side can be imaged onto a LCOS or LCD imager with a lens system. Hence the illumination is uniform and very efficient because of the format conversion between the collecting mean (reflector) and imager. If polarized light is needed for the imager, more than half of the available light will be lost by polarizing the illumination unless polarization is achieved by a mean that recycles one of the components.

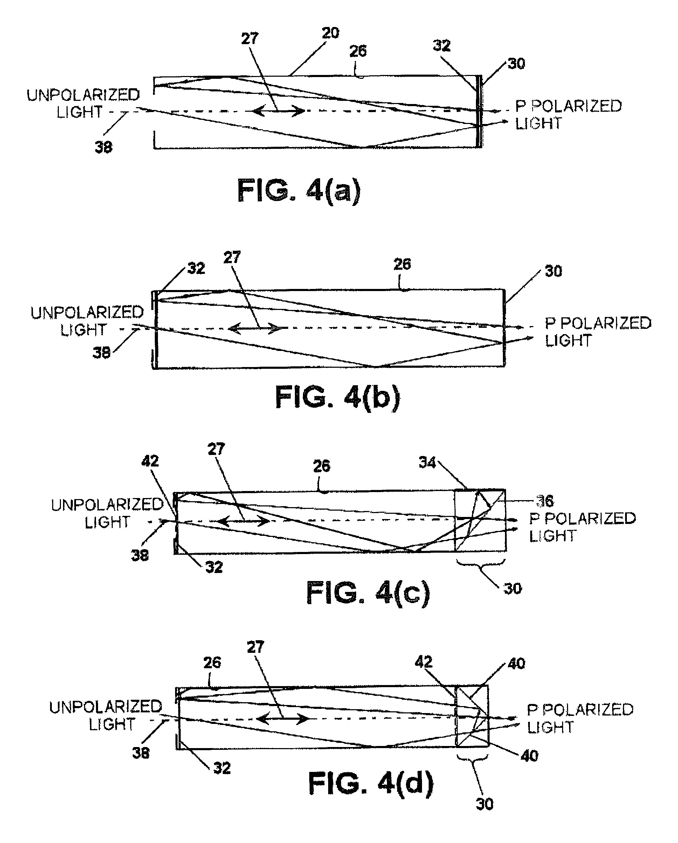

An integrating rod is shown on Figure 2, with interior reflective walls 26. The mirrored side walls define a light path 27 between the aperture and the reflecting polarizer, as shown in Figures 4(a) - 4(d). The reflecting polarizer is a means for transforming the polarization of light. Figures 2(a) and 2(b) show how the size of the integrating rod can be optimally chosen: big enough for the image of the source to be injecting efficiently into the integrator. If the input surface of the integrator is a reflecting surface with an aperture or hole 18 that is big enough to inject enough light into the integrator, as shown in Figures 3(a) and 3(b), it is easy to put a reflecting polarizer at the end of the integrator. That polarizer is going to let one component through, p polarized light for instance, while reflecting back into the integrator the other component (s component for instance). As the s polarized light arrives again at the input side of the integrator, some of it will be reflected back into the integrator, some of it will leak out through the hole. The s-polarized component that has been reflected back into the light pipe should have it's polarization rotated before it can go through the reflecting polarizer the second time it reaches it.

Figures 4(a) show four embodiments as to how the inventive arrangements can be implemented. In the embodiment shown in Figure 4(a), the reflecting polarizer 30 is a Proflux brand from the Moxtek company, one of the very few reflecting polarizers known to work when arranged perpendicularly to the longitudinal axis 38 of the integrating rod and the light path 27 defined therein. The light reflected by the polarizer is recycled or recovered by passing twice through a means for transforming polarization embodied as a quarter wave plate 32, which in Figure 4(a) is disposed at the same end of the light path 27 as the reflecting polarizer.

The quarter wave plate can also be located near the input port or aperture 18 of the light integrator, as shown in Figure 4(b). Placing the quarter wave plate at the end of the light path opposite to the reflecting polarizer has the advantage of attenuating less light than at the output port; and thus is the preferred embodiment as between Figures 4(a) and 4(b).

Figures 4(c) and 4(d) show alternative systems for reflecting the polarization. The mirrored surfaces 26 of the light integrator can be a dielectric coating that does not rotate the polarization, for example a Silflex brand coating from the Unaxis company. The integrator can also be a rod made out of glass. Then, the output reflecting polarizer is effectively glued or otherwise adhered to the output port. In Figures 4(c) and 4(d) the reflecting polarizer is an assembly, as opposed to the single optical device in Figures 4(a) and 4(b). In Figure 4(c) the assembly includes separate parts, namely a mirror 34 and a polarized beam splitter 36 disposed at 45° to the axis 38 of the light path 27. In Figure 4(d) the assembly also includes two parts, two polarized beam splitters 40 each disposed at 45° to the axis of the light path 27, and at an angle of 90° with respect to one another,

The aperture on the input side of the light path can be made by a reflecting coating having a hole. A retardation film 42 is disposed in the light path 27, either between the output surface of the rod and the reflecting polarizer or at its input. The film is represented by a dashed line, disposed near the input end of the light path in Figures 4(c) and disposed near the output of the light path in Figure 4(d). The positions of the film can be reversed, input end to output end and output end to input end, in each of Figures 4(c) and 4(d).

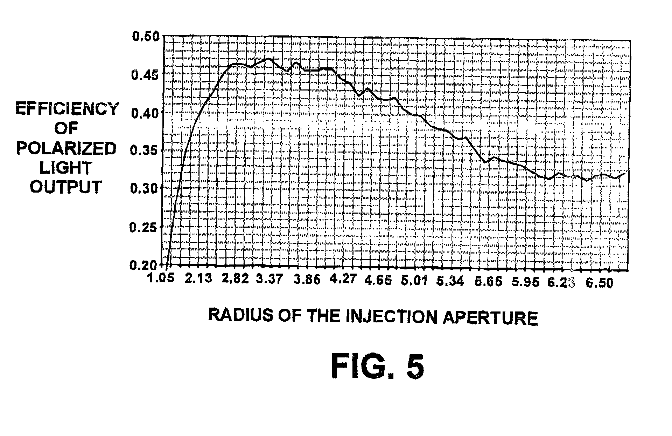

A system in accordance with the inventive arrangements has been simulated with ASAP according to the following conditions. The lamp is a Radiant imaging 16 bit model of a widely used high pressure discharge lamp, The reflector is elliptical and focuses light into an integrator that has an input size of 11.08 × 6.23 mm. The sides of the integrator reflect 98% of the light, regardless of the angle of incidence, the polarization and the wavelength (Silflex mirror). The reflecting polarizer is a Proflux brand from Moxtek with a transmission of 85% of the p polarization. It reflects the s polarization, which is recycled by a quarter wave plate located at the input side of the integrator with an efficiency of 85%. The size of the injection aperture has been varied and the efficiency of the system plotted against the radius of the aperture. The graph in Figure 5 shows that there is an optimal size of 3.25 mm radius and that the efficiency for this size of injection aperture is of 0.472. This aperture is the best tradeoff between injection efficiency and recycling. If it is smaller, there is less light injected into the light pipe. If it is bigger, there is more s-polarized light leaking through after reflection onto the Moxtek polarizer. If the radius grows above the size of the semi diagonal of the input port of the integrator, an efficiency is reached that the illumination system would have without the recycling. On the graph, this is read from radius of apertures above 6.33 mm and found to be 0.323. Hence the gain that can be expected for this geometry is G = 0.472/0.323 = 1.46, which is a very good value.

Big advantages of this system compared to those based on a linear array of PBS's are the extreme compactness and the fact that the system can easily fit into already existing designs without much change in the geometry, since the system does not require extra optical means aside from a relay lens system to image the output of the integrator onto the imager. Moreover, such a relay system is already implemented in a system using an integrating light pipe. Better gains can be achieved with light sources that have a smaller burner than the one used in this simulation case, which had a gap of 1.3 mm. The system also has cost advantages, since there are only a few new parts added, and no major tooling is needed, as would be the case for fly's eye lens and PBS arrays.

In Figure 5 the maximum value of 1 is the total light flux of the source. Above a radius of 6.33 mm, the output is steady because the injection hole is bigger than the input size of the integrator. Hence there is no polarization recycling. The efficiency is then about 32.3%. This means that 32.3% of the light emitted by the source is available for illuminating the imagers and is polarized. With recycling, the best value is achieved for a radius of 3.25 mm and peaks at 47.2% of polarized light, which is a gain of 46%.

## Claims

1. A polarization recovery system, comprising:
a light channel;
said light channel having a light injection aperture for receiving light from a source of illumination radiating light with first and second polarizations;
said light channel having a reflecting polarizer that transmits said injected light having said first polarization and that reflects said injected light having said second polarization;
at least one reflective surface for further reflecting said reflected light back toward said reflecting polarizer; and,
means positioned in said light channel for transforming said light reflected by said reflecting polarizer into light having said first polarization, said transformed light also being transmitted by said reflecting polarizer.

2. The polarization recovery system of claim 1, wherein said light channel is defined by inwardly facing reflective surfaces, including said at least one reflective surface.

3. The polarization recovery system of claim 2, wherein said transforming means comprises a quarter wave plate.

4. The polarization recovery system of claim 1, wherein said transforming means comprises a quarter wave plate.

5. The polarization recovery system of claim 4, wherein said light channel forms part of a light integrator.

6. The polarization recovery system of claim 1, wherein said light channel forms part of a light integrator.

7. The polarization recovery system of claim 2, wherein said light channel forms part of a light integrator.

8. The polarization recovery system of claim 3, wherein said light channel forms part of a light integrator.

9. The polarization recovery system of claim 1, wherein said aperture and said reflecting polarizer are disposed at opposite ends of said light channel.

10. The polarization recovery system of claim 8, wherein said aperture and said reflecting polarizer are disposed at opposite ends of said light channel.

11. The polarization recovery system of claim 1, wherein said reflecting polarizer and said quarter wave plate are at the same end of said light channel.

12. The polarization recovery system of claim 8, wherein said reflecting polarizer and said quarter wave plate are at the same end said light channel.

13. The polarization recovery system of claim 1, wherein said aperture and said quarter wave plate are at the same end of said light channel.

14. The polarization recovery system of claim 8, wherein said aperture and said quarter wave plate are at the same end of said light channel.

15. The polarization recovery system of claim 1, wherein said reflecting polarizer comprises a single optical device that both reflects light and transmits polarized light.

16. The polarization recovery system of claim 1, wherein said reflecting polarizer comprises:
a mirror disposed parallel to a longitudinal axis of the light path; and,
a polarized beam splitter disposed at an angle of 45° with respect to said axis.

17. The polarization recovery system of claim 1, wherein said reflecting polarizer comprises first and second polarized beam splitters, each disposed at an angle of 45° with respect to a longitudinal axis of the light path, and disposed at an angle of 90° with respect to one another.

18. A method for recovering polarization in an illumination system for a liquid crystal display, comprising the steps of:
guiding light having first and second polarizations in a forward direction along a light path;
passing said guided light having said first polarization out of said path;
reflecting said light having said second polarization backwardly and forwardly along said light path;
transforming said reflected light during said reflecting step to have said first polarization; and,
passing said light transformed to said first polarization out of said path, enabling more of said light having said first polarization to be passed out of said path.

19. The method of claim 18, further comprising the step of integrating said light in said light conducting path during said guiding and reflecting steps.

20. The method of claim 18, comprising the step of transforming said polarization of said reflected light in one-quarter wave increments.

21. An illumination system for a liquid crystal imager, comprising:
a source of randomly polarized light;
a light integrator having an aperture at one end for receiving said randomly polarized light and having reflective surfaces defining an internal light path;
a reflecting polarizer disposed at an opposite end of said light path that transmits light having a first polarization and that reflects light having a second polarization, said light having said second polarization being reflected back and forth along said light path; and,
means positioned in said light channel for transforming said back and forth reflected light into light having said first polarization, said transformed light also being transmitted by said reflecting polarizer.

22. The system of claim 21, comprising a liquid crystal imager illuminated by both components of said light transmitted by said reflecting polarizer and having said first polarization.

23. The system of claim 21, wherein said transforming means comprises a quarter wave plate.

24. The system of claim 21, wherein said transforming means and said reflecting polarizer are disposed at the same end of the light path.

25. The system of claim 21, wherein said aperture and said transforming means are disposed at the same end of the light path.
